# FASCICULE DE BREVET EUROPEEN

(11) **EP 1 910 061 B1**
(45) Date de publication et mention de la délivrance du brevet: **11.12.2013**
(21) Numéro de dépôt: 06777554.4
(22) Date de dépôt: 03.07.2006
(51) Int. Cl.: B29C 65/08

(54) **PROCEDE D'ASSEMBLAGE PAR ULTRASONS**
ULTRASCHALL-MONTAGEVERFAHREN
ULTRASONIC ASSEMBLY METHOD

(30) Priorité: 04.07.2005 FR 0552028
(43) Date de publication de la demande: 16.04.2008
(73) Titulaire: European Aeronautic Defence and Space Company - EADS France, 75016 Paris (FR)
(72) Inventeur: SOCCARD, Eric, F-44130 Blain (FR)
(74) Mandataire: Ilgart, Jean-Christophe
(86) Numéro de dépôt international: PCT/EP2006/063806
(87) Numéro de publication internationale: WO 2007/003626

(56) Documents cités:
- EP-A- 0 967 021
- WO-A-2004/091841
- DE-A1- 4 217 727
- DE-U1- 9 219 123
- FR-A- 2 584 336
- GB-A- 1 047 295
- JP-A- 53 045 380
- US-A- 5 930 041
- US-A1- 2005 028 492

## Description

### DOMAINE TECHNIQUE

La présente invention est relative à un procédé d'assemblage par ultrasons d'au moins deux pièces rigides à base de résine thermoplastique. De telles pièces peuvent être notamment utilisées dans l'aéronautique, il peut s'agir de panneaux de fuselage ou de plancher à rigidifier par un ou plusieurs profilés agencés en cadre ou en lisse. D'autres types de pièces sont bien sûr envisageables.

Ces pièces sont généralement stratifiées et renforcées par des fibres, par exemple de carbone, dont le taux est généralement d'au moins 5% en volume. Elles sont généralement formées de couches préimprégnées superposées et drapées en orientant les fibres de renfort différemment selon les couches.

### ÉTAT DE LA TECHNIQUE ANTÉRIEURE

Actuellement, il existe plusieurs méthodes pour l'assemblage de telles pièces rigides à base de résine thermoplastique. Les deux pièces se recouvrent au niveau de l'assemblage et la zone de recouvrement forme ce que l'on appelle un joint de soudure.

Actuellement l'assemblage se fait de manière statique ou quasi statique.

Les méthodes d'assemblage statique correspondent au soudage sous bâti chauffant ou en autoclave soit par conduction thermique d'un matériau d'apport ou par résistance électrique chauffante. Le soudage statique permet d'obtenir des joints continus et uniformes de bonne qualité mais conduit à des coûts élevés et n'est pas compatible avec une automatisation dans la mesure où les pièces à assembler sont de grandes dimensions.

La demande de brevet EP 0 261 850 décrit une méthode d'assemblage par ultrasons de grandes pièces en résine thermoplastique chargée. Les pièces sont superposées et définissent une zone d'interface. Des ultrasons sont appliqués par un outil appelé sonotrode dont une embase active vient en contact avec l'une des pièces au niveau de la zone d'interface. Lorsque l'outil est excité, un échauffement se produit et il y a fusion entre les deux pièces dans une région de la zone d'interface en regard avec l'outil. La méthode décrite dans cette demande de brevet propose de réaliser ainsi, de manière séquentielle, des points de liaison les uns à côté des autres et ces points de liaison forment un joint de soudure. De la résine thermoplastique additionnelle est insérée entre les deux pièces à assembler. Le joint de soudure obtenu n'est pas réellement uniforme puisqu'il est constitué d'une série de points de liaison, il comporte des discontinuités. Un tel joint de soudure n'est pas satisfaisant à cause de son inhomogénéité, il risque de poser des problèmes mécaniques.

Pour améliorer la résistance mécanique de l'assemblage, un treillis métallique peut aussi être placé à l'interface entre les deux pièces. Mais dans ce cas, le joint de soudure est électriquement conducteur à cause de la présence du treillis métallique. Il peut même se dégrader s'il est touché par la foudre.

Dans tous les cas, le joint de soudure obtenu n'est pas totalement satisfaisant.

La sonotrode est interchangeable, on emploie une sonotrode dont l'embase active est de grande dimension pour l'assemblage de pièces planes et de plus petite dimension pour l'assemblage de pièces courbes. Plus l'embase est grande, plus l'énergie ultrasonore à fournir est importante pour obtenir la liaison et plus le point de liaison est grand. Globalement cette méthode est coûteuse en cycle et en énergie.

Les seules méthodes connues d'assemblage aptes à faire des joints continus et uniformes de bonne qualité entre deux pièces rigides thermoplastiques sont l'assemblage par induction et l'assemblage par laser.

Lors d'un assemblage par induction, on place un treillis métallique à l'interface entre les deux pièces. Il s'échauffe sous l'effet d'un champ magnétique et transmet sa chaleur aux deux pièces à assembler ce qui provoque leur fusion. Ce procédé est rendu complexe par le fait que le carbone qui charge le matériau thermoplastique est rendu électriquement conducteur. Les mêmes inconvénients que lors du soudage par ultrasons avec treillis métallique apparaissent.

L'assemblage par laser ne peut être utilisé que si l'une des pièces à assembler est transparente au rayonnement laser. En passant à travers la matière transparente le rayonnement issu du laser provoque un échauffement et une fusion des matières se trouvant à l'interface entre les deux pièces. Dans le proche infra rouge, la plus part des matériaux thermoplastiques sont transparents dans la mesure où ils ne sont pas ou pratiquement pas chargés en carbone. Si la charge en carbone excède environ 5% en volume, ils deviennent absorbants et cette méthode ne peut être utilisée.

Le document US 2005/0028492 divulgue un procédé d'assemblage des pièces d'un conteneur à toner par ultrasons. Les pièces sont sans double courbure.

Le document GB 1 047 295 divulgue un procédé d'assemblage par ultrasons de pièces en matière synthétique dure pour faire un corps creux, les pièces étant sans double courbure.

Les documents DE 42 17 727 et DE 92 19 123 U1 décrivent un procédé d'assemblage par ultrasons de deux feuilles thermoplastiques, séparées par des espaceurs pour faire un système plan utilisé dans la construction.

Le document JP 53 04 5380 divulgue un procédé d'assemblage par ultrasons de deux pièces en matériau thermoplastique, l'une des pièces étant une gouttière annulaire et l'autre un couvercle sensiblement plan.

Le document US 5 930 041 divulgue un procédé d'assemblage par ultrasons de deux films de matériau thermoplastique, l'un des films étant doté sur l'une de ses faces d'éléments reflecteurs. L'assemblage se fait sur un rouleau.

### EXPOSÉ DE L'INVENTION

La présente invention a pour but de proposer un procédé d'assemblage d'au moins deux pièces rigides à basse de résine thermoplastique ne présentant pas les limitations et difficultés ci-dessus.

Un but est en particulier de proposer un procédé d'assemblage conduisant à un joint de soudure le plus uniforme et continu possible.

Un but de l'invention est de proposer un procédé d'assemblage à coût réduit et aisément automatisable.

Un autre but est de proposer un procédé d'assemblage qui puisse être utilisé aisément avec des pièces de taille quelconque.

Un autre but est de proposer un procédé d'assemblage qui puisse être utilisé avec des pièces de géométrie quelconque, qu'elles soient planes ou courbes même avec plusieurs courbures.

Un autre but de l'invention est de proposer un procédé d'assemblage qui conduise à un joint de soudure ayant une résistance mécanique satisfaisante sans à avoir à recourir à un renfort métallique de manière à éviter tout problème d'incompatibilité électromagnétique et de dégradation causée par la foudre.

Pour atteindre ces buts l'invention concerne plus précisément un procédé d'assemblage d'au moins deux pièces composites rigides à base de matériau thermoplastique selon la revendication 1. Il comprend les étapes consistant à :
superposer les deux pièces de manière à ce qu'elles aient au moins une zone d'interface, l'une au moins des deux pièces portant un ou plusieurs directeurs d'énergie, en saillie, situés dans la zone d'interface,
exciter au moins une source à ultrasons mise en contact contre l'une des deux pièces, cette source à ultrasons appliquant un effort de compression aux deux pièces dans une région de la zone d'interface située en regard de la source à ultrasons,
déplacer la source à ultrasons de manière continue au niveau de la zone d'interface de manière à former un joint de soudure continu par fusion de matériau thermoplastique de la région située en regard de la source à ultrasons.

Il est avantageux pour améliorer la qualité du joint de maintenir les deux pièces en pression dans la zone d'interface en avant et/ou en arrière de la région située en regard de la source à ultrasons. Les notions d'avant ou d'arrière s'entendent en fonction du sens de déplacement de la source à ultrasons.

Il est possible que la pression entre les deux pièces en avant et/ou en arrière de la région située en regard de la source à ultrasons soit ajustable.

La source à ultrasons fournit aux pièces une énergie lorsqu'elle est excitée, cette énergie peut être régulée en fonction d'un paramètre choisi parmi la vitesse de déplacement de la source à ultrasons, son amplitude de vibration lorsqu'elle est excitée, l'effort de compression qu'elle applique aux deux pièces, de manière à assurer une fusion optimale.

La régulation est avantageusement de type PID.

Le déplacement peut se faire dans une, deux ou trois dimensions ce qui permet d'assembler aisément des pièces de formes extrêmement diverses et complexes.

La source à ultrasons comporte une sonotrode ayant une embase venant en contact avec la pièce, cette embase ayant de préférence au moins un bord galbé pour limiter les frottements et éviter d'endommager la pièce qu'elle contacte.

Le bord galbé se trouve de préférence du côté avant de la sonotrode dans le sens du déplacement.

Les directeurs d'énergie peuvent être des nervures ou des plots.

Pour améliorer la fusion, il est préférable que les directeurs d'énergie soient portés par la pièce en contact avec la source à ultrasons.

Pour améliorer la qualité du joint, il est préférable que les nervures soient dirigées dans le sens du déplacement.

Le matériau thermoplastique est semi-cristallin ou amorphe.

Lorsque plusieurs sources à ultrasons sont utilisées, il est préférable qu'elles aient un même déplacement synchrone dans le but de réduire le temps assemblage.

La présente invention concerne également un assemblage obtenu par le procédé de l'invention.

Dans cet assemblage, la pièce qui porte les directeurs d'énergie a été traitée par formage, estampage ou extrusion pour obtenir les directeurs d'énergie.

Dans cet assemblage au moins une des pièces est de préférence stratifiée.

Une des pièces peut être chargée en fibres de renfort.

Une des pièces peut être un profilé ou un panneau.

Un dispositif d'assemblage d'au moins deux pièces rigides à base de matériau thermoplastique permettant de mettre en oeuvre le procédé de l'invention comporte au moins un ensemble de soudage à ultrasons incluant une source d'ultrasons à mettre en contact avec l'une des pièces dans une zone d'interface définie par la superposition des deux pièces, et dotée de moyens de pression pour appliquer un effort de compression aux deux pièces,
des moyens de déplacement de l'ensemble de soudage à ultrasons de manière à ce que la source à ultrasons suive un chemin continu à la surface de la pièce, ce chemin ayant un tracé correspondant à celui d'un joint de soudure obtenu dans la zone d'interface en regard de la source à ultrasons.

L'ensemble de soudage à ultrasons peut comporter des moyens de pressage des deux pièces placés en aval de la source à ultrasons.

L'ensemble de soudage à ultrasons peut comporter des moyens de stabilisation des deux pièces placés en amont de la source à ultrasons.

Les moyens de pressage et les moyens de stabilisation peuvent comporter un ou plusieurs galets presseurs.

Il est possible de prévoir des moyens de régulation d'une pression appliquée par les moyens de pressage et/ou les moyens de stabilisation sur les deux pièces.

La source à ultrasons fournit de l'énergie aux deux pièces, l'ensemble de soudage à ultrasons peut comporter des moyens de régulation de l'énergie en fonction d'un paramètre choisi parmi la vitesse de déplacement de l'ensemble de soudage à ultrasons, l'amplitude de vibration de la source à ultrasons lorsqu'elle est excitée, l'effort de compression qu'elle applique aux deux pièces.

La régulation est avantageusement de type PID.

Il est préférable que les moyens de déplacement soient communs à plusieurs ensembles de soudage à ultrasons.

Les moyens de déplacement peuvent autoriser un déplacement dans une, deux ou trois dimensions.

La source à ultrasons comporte une sonotrode ayant une embase à mettre en contact avec la pièce, cette embase ayant de préférence au moins un bord galbé.

Le bord galbé peut se trouver de préférence du côté avant de la sonotrode dans le sens du déplacement.

### BRÈVE DESCRIPTION DES DESSINS

La présente invention sera mieux comprise à la lecture de la description d'exemples de réalisation donnés à titre purement indicatif et nullement limitatif en faisant référence aux dessins annexés sur lesquels :
Les figures 1A, 1B, 1C montrent un dispositif d'assemblage d'au moins deux pièces rigides planes et les deux pièces avant assemblage et après assemblage.
Les figures 2A, 2B montrent de manière schématique en coupe longitudinale et transversale un dispositif d'assemblage d'au moins deux pièces rigides courbes.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

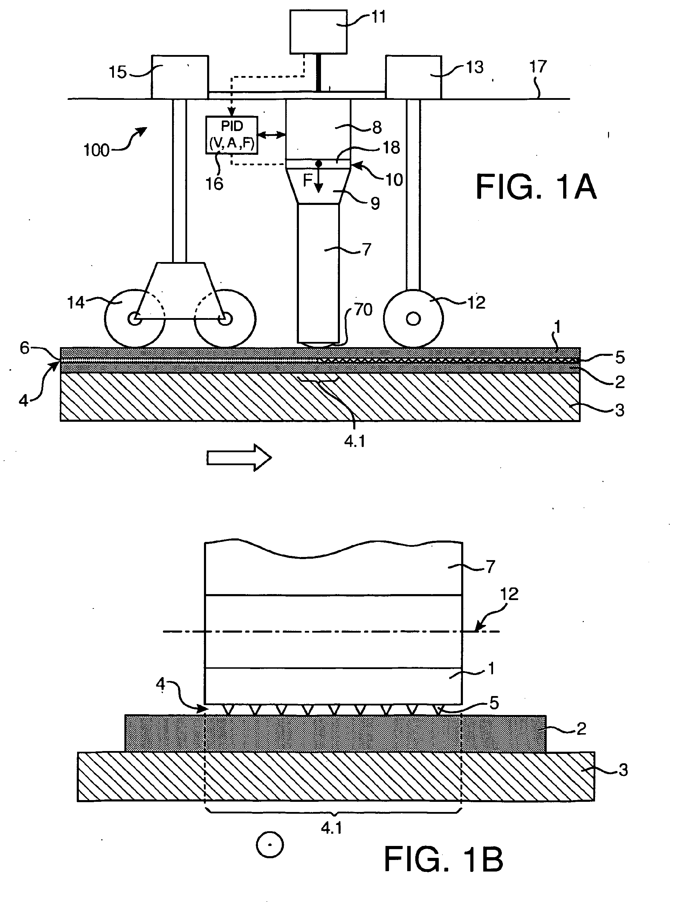

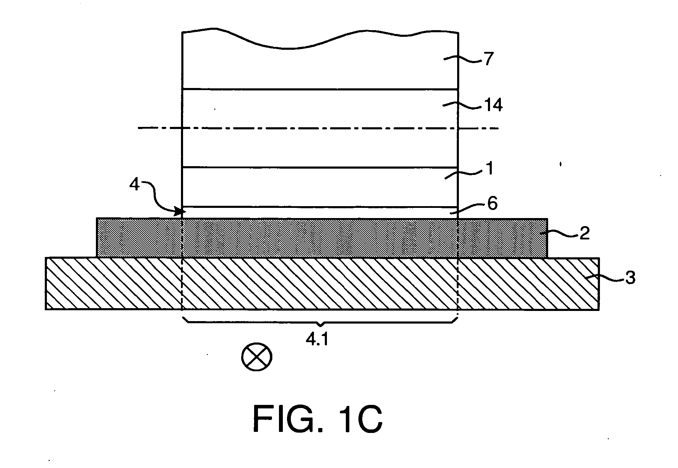

On va maintenant décrire un exemple de procédé d'assemblage d'au moins deux pièces rigides en matériau thermoplastique selon l'invention en se référant aux figures 1A, 1B, 1C. qui montrent respectivement une installation pour la mise en oeuvre du procédé de l'invention et les deux pièces avant et après assemblage.

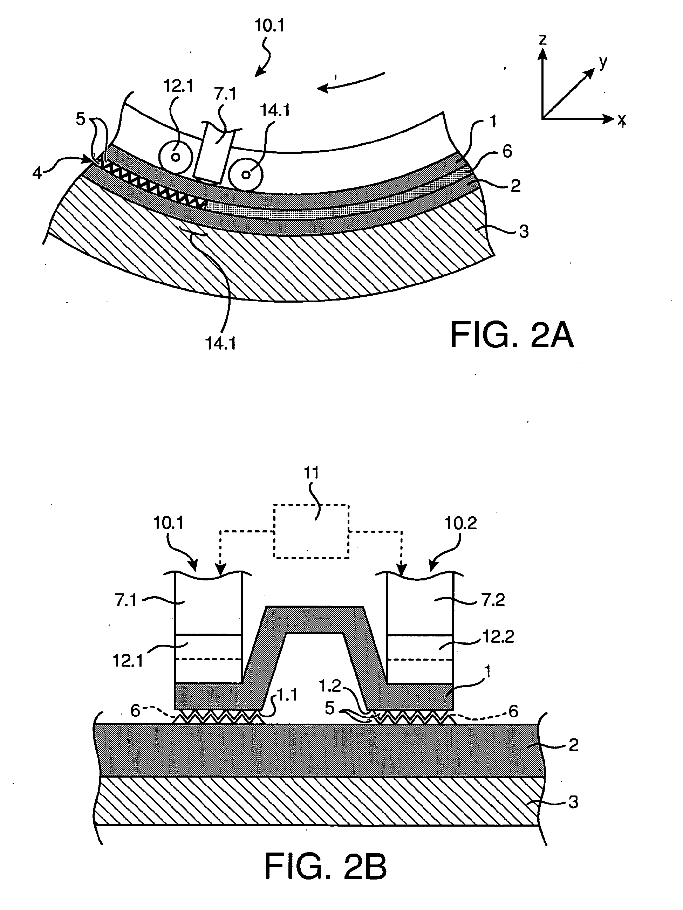

On suppose que dans l'exemple décrit l'une des pièces est un profilé 1 et l'autre un panneau 2. D'autres types de pièces sont bien sûr envisageables. Le panneau 2 est représenté plan mais il pourrait être courbe comme sur la figure 2A notamment s'il s'agit d'un panneau de fuselage d'un aéronef. Le profilé 1 pourrait alors épouser la courbure du panneau.

Ces pièces 1, 2 sont rigides, elles sont réalisées en matériau thermoplastique et sont de préférence stratifiées. Pour renforcer leur rigidité, elles peuvent être renforcées en fibres. Les fibres de renfort peuvent être en carbone, en verre ou en bore par exemple. De telles pièces sont couramment appelées structures composites. On suppose que le fond employé sur les figures 1 schématise les fibres.

Le matériau thermoplastique est de préférence amorphe ou semi-cristallin. Comme matériau thermoplastique on peut employer par exemple des résines de type PEI (polyétherimide) PEEK (polyéthéther-cétone), PPS (polyphénylène sulfure), PEKK (polyétherkétonekétone).

Le procédé d'assemblage s'applique aussi bien à des pièces 1, 2 ayant une charge importante en fibres de renfort (par exemple supérieure à 30% en volume) qu'à des pièces peu chargées (par exemple moins de 5% en volume) ou même pas chargées du tout. L'assemblage va se faire par ultrasons à l'aide d'au moins un appareil de soudage à ultrasons 10 comprenant une sonotrode 7 mécaniquement couplée à un générateur convertisseur 8 par l'intermédiaire d'un amplificateur 9 (connu sous la dénomination de booster). Le générateur-convertisseur 8 fournit à partir d'énergie électrique des vibrations mécaniques à la sonotrode 7. L'amplificateur 9 amplifie l'amplitude des vibrations délivrées par le générateur-convertisseur 8. La sonotrode 7 amplifie également l'amplitude des vibrations. La fréquence des vibrations peut être comprise entre environ 15 et 40 kHz et de manière préférée valoir environ 20 kHz.

Les deux pièces 1, 2 sont superposées au moins localement et une zone d'interface 4 est définie entre elles. L'une des pièces 2 repose sur un outillage de dépose 3 ou enclume et la source à ultrasons 10 est mise en contact avec l'autre pièce 1 à assembler, par la sonotrode 7, au niveau de la zone d'interface 4. Un effort de compression F est appliqué aux deux pièces par la source à ultrasons dans une région 4.1 de la zone d'interface 4 située en regard de la source à ultrasons. Cet effort de compression peut être fourni par des moyens de pression 18 par exemple pneumatiques inclus dans la source à ultrasons 10.

La source à ultrasons 10 est excitée et mise en mouvement de manière continue tout en restant en contact avec l'autre pièce 1 à assembler au niveau de la zone d'interface 4 de manière à suivre un chemin qui va matérialiser au niveau de la zone d'interface 4 un joint de soudure 6 continu et uniforme entre les deux pièces 1, 2 à assembler. Le déplacement de la sonotrode 7 est curviligne à la surface de l'empilement. Cette surface est courbe, elle correspond à la surface de la pièce en contact avec la sonotrode. Dans tous les cas ce déplacement est continu. Ce déplacement se fait dans l'espace, c'est-à-dire dans trois dimensions. Un déplacement dans trois dimensions peut conduire à l'assemblage avec un joint linéaire de deux pièces à deux rayons de courbure.

Des moyens de déplacement 11 de la source à ultrasons 10 sont représentés schématiquement par un monteur. La source à ultrasons 10 peut coopérer avec une glissière, un portique ou être portée par un bras éventuellement articulé, tout dépend du mouvement qu'elle doit suivre: La glissière autorise un mouvement en une dimension, le portique peut autoriser un mouvement en deux dimensions et le bras articulé un mouvement en trois dimensions. Sur la figure 1A une glissière ou un portique 17 a été schématisé.

Par friction intermoléculaire l'énergie cyclique de vibration de la sonotrode 7 est convertie en énergie thermique dans le matériau thermoplastique dans la région 4.1 de la zone d'interface 4 en regard de la sonotrode 7. La sonotrode 7 possède une embase active 70 qui vient en contact avec l'autre pièce 1 à assembler. Cette embase 70 comporte deux bords latéraux, un bord avant et un bord arrière en fonction du déplacement prévu. La largeur de l'embase 70 en contact avec l'autre pièce 1 correspond sensiblement à celle du joint 6 qui va être obtenu. Ces dimensions seront choisies en fonction de l'énergie thermique à apporter pour obtenir la fusion de la matière thermoplastique dans la zone de l'interface 4. Des températures de l'ordre de 400°C sont requises pour obtenir la fusion de résine PEEK et de l'ordre de 300°C pour obtenir la fusion de résine PPS.

Il est préférable que l'embase 70 de la sonotrode 7 ne soit pas totalement plane mais qu'elle soit galbée notamment au niveau de son bord avant pour limiter les frottements avec la pièce 1 qu'elle contacte. Cela évite également d'endommager la surface de la pièce 1 qu'elle contacte pendant le déplacement. Ce galbe apporte également un avantage en cas de pièce courbe. Si les surfaces des pièces à assembler sont courbes, il est préférable que le bord arrière soit également galbé.

Dans ce type de source à ultrasons 10, la sonotrode 7 est généralement amovible de manière à pouvoir notamment l'adapter aux caractéristiques du joint 6 à obtenir et à celles des surfaces à assembler. Il en est généralement de même pour l'amplificateur 9 pour pouvoir adapter le gain de la source à ultrasons 10.

Pour être sûr que les deux pièces 1, 2 seront solidement jointes l'une à l'autre au moins l'une des pièces 1, 2 comporte un ou plusieurs directeurs d'énergie 5 localisés dans la zone d'interface 4. Ces directeurs d'énergie 5 vont concentrer, canaliser l'énergie mécanique au niveau de la zone d'interface 4 et vont contribuer en fondant à réaliser le joint de soudure 6 de section voulue à l'interface entre les deux pièces 1, 2. Sur les figures 1, les directeurs d'énergie 5 sont portés par le profilé 1 mais on pourrait envisager que ce soit l'autre pièce 2 qui comporte les directeurs d'énergie ou même qu'ils soient répartis sur les deux pièces 1, 2 comme sur les figures 2. Toutefois, pour améliorer la qualité du joint de soudure 6, il est préférable que les directeurs d'énergie soient disposés sur la pièce 1 qui va contacter la source à ultrasons 10.

Un directeur d'énergie 5 peut prendre la forme d'une nervure ou d'un plot faisant saillie de la pièce 1 qui le porte vers l'autre pièce 2 lorsque les deux pièces sont superposées. Lorsqu'un directeur d'énergie est de type nervure, cette dernière suit généralement l'orientation du joint 6. Les figures montrent aussi bien des directeurs d'énergie en nervure ou en plot. De préférence, on logera plusieurs nervures ou plusieurs plots espacés les uns des autres en fonction de la largeur du joint 6 désiré. Quant aux plots, ils pourront être disposés en lignes ou en quinconce ou autre.

La section transversale des directeurs d'énergie 5 pourra être sensiblement triangulaire, trapézoïdale, rectangulaire, carrée, semi-circulaire ou autre. S'il s'agit de plots, ils pourront ainsi être parallélépipédiques, semi-sphériques, pyramidaux ou coniques éventuellement être tronqués.

Ces directeurs d'énergie 5 pourront être élaborés directement lors de la fabrication de la pièce qui les porte par estampage, extrusion ou par formage continu à l'aide d'un outil rainuré s'il s'agit de nervures.

Par exemple pour réaliser un joint rectiligne d'épaisseur approximative de 0,05 millimètre en résine PEEK, il est possible de disposer des directeurs d'énergie de type nervure, orientés selon l'axe principal du joint, espacés tous les 1,5 millimètres et dont la hauteur crête est de 0,3 millimètre. L'espacement s'entend de crête à crête. La section droite des directeurs d'énergie de cet exemple est triangulaire.

Il est préférable de prévoir des moyens de pressage 12 disposés en aval de la source à ultrasons 10 et qui pressent les deux pièces 1, 2 l'une contre l'autre. Cette pression est appliquée en en aval de la région 4.1 de la zone d'interface 4 située en regard de la source à ultrasons 10. Ces moyens de pressage 12 assurent un placage convenable des deux pièces 1, 2 avant qu'elles ne fondent alors qu'elles sont encore libres. Ces moyens de pressage 12 peuvent être réalisés par un ou plusieurs galets presseurs mis en contact avec les deux pièces 1, 2 superposées. Des moyens de régulation de la pression 13 peuvent être prévus, il peut s'agir par exemple de moyens pneumatiques incluant une électrovanne. On choisira de préférence une pression de placage inférieure ou égale à celle de la pression de l'air comprimé industriel qui est de l'ordre de 6 bars.

Il est avantageux de prévoir des moyens de stabilisation 14 disposés en amont de la source à ultrasons 10. Ils pressent les deux pièces 1, 2 qui viennent d'être assemblées et les maintiennent en position pendant que le joint de soudure 6, tout juste créé, est en train de se solidifier en refroidissant. Cette pression est appliquée en amont de la région 4.1 de la zone d'interface 4 située en regard de la source à ultrasons 10. Ces moyens stabilisateurs 14 peuvent être réalisés par un ou plusieurs galets stabilisateurs. Des moyens de régulation de la pression 15 appliquée sur les galets peuvent être prévus ou de régulation, il peut s'agir par exemple de moyens pneumatiques incluant une électrovanne. On choisira de préférence une pression de placage inférieure ou égale à celle de la pression de l'air comprimé industriel qui est de l'ordre de 6 bars.

Pour obtenir un joint de soudage 6 de qualité optimale on cherche à apporter dans la zone d'interface 4 une énergie instantanée suffisante pour assurer une bonne fusion du matériau thermoplastique en surface des deux pièces et du matériau thermoplastique des directeurs d'énergie.

Il est possible de prévoir des moyens de régulation 16 du niveau de l'énergie apporté par la source à ultrasons 10. Ces moyens de régulation 16 peuvent être de type PID (abréviation de l'expression anglo-saxonne proportional intégral derivative soit proportionnel intégral dérivé) standard. De tels moyens de régulation 16 sont classiques pour un homme du métier. Comme paramètre de régulation de l'énergie, il est possible de choisir l'amplitude A de la source à ultrasons 10, c'est-à-dire l'amplitude au niveau du convertisseur, la vitesse de déplacement V de la source à ultrasons 10 ou l'effort de compression F appliqué par la source à ultrasons 10 aux pièces 1, 2 à assembler.

Si les moyens de pressage 12 et/ou les moyens de stabilisation 14 sont présents, ils sont solidaires de la source à ultrasons 10 et suivent son déplacement. Ils forment avec la source à ultrasons 10 un ensemble de soudage à ultrasons référencé 100.

Si des moyens de régulation 16 sont présents, ils sont également inclus dans l'ensemble de soudage à ultrasons 100.

Par contre, on considère que l'ensemble de soudage à ultrasons 100 n'inclut pas les moyens de déplacement 11.

Sur les figures 2A, 2B on a représenté une opération d'assemblage d'au moins deux pièces 1, 2 à l'aide de plus d'une source à ultrasons 10.1, 10.2. Un repère orthonormé x,y,z est tracé pour faire comprendre que le déplacement de la source à ultrasons est susceptible de se faire dans trois dimensions.

L'une des pièces à assembler est un profilé 1 ayant une section sensiblement en oméga. L'autre pièce 2 est un panneau courbe. Le profilé en oméga 1 comporte à sa base deux surfaces d'assemblage distinctes 1.1, 1.2 à fixer au panneau 2.: Deux joints de soudure 6 sont à faire. Avec le procédé de l'invention, ces deux joints 6 peuvent être faits simultanément en utilisant deux ensembles de soudage similaires à ceux décrits précédemment et utilisés en parallèle avec une commande du déplacement commune. Sur les figures 2, les ensembles de soudage à ultrasons sont matérialisés seulement par leur source à ultrasons 10.1, 10.2, par les moyens de pressage 12.1, 12.2 et les moyens de stabilisation 14.1, 14.2. Les moyens de déplacement 11 sont communs aux deux ensembles de soudage à ultrasons. Les deux sources à ultrasons 10.1, 10.2 ont alors un même déplacement synchrone.

Sur ces figures 2A, 2B, on suppose que les éléments directeurs 5 sont répartis sur les deux pièces 1, 2 à assembler.

## Revendications

1. Procédé d'assemblage d'au moins deux pièces (1, 2) composites rigides à base de matériau thermoplastique formées de couches préimprégnées superposées et drapées à deux rayons de courbure consistant à :
superposer les deux pièces (1, 2) de manière à ce qu'elles aient au moins une zone d'interface (4), l'une au moins des deux pièces portant plusieurs directeurs d'énergie (5) en saillie situés dans la zone d'interface (4),
exciter au moins une source à ultrasons (10) mise en contact contre l'une des deux pièces, cette source à ultrasons (10) appliquant un effort de compression (F) aux deux pièces (1, 2) dans une région (4.1) de la zone d'interface située en regard de la source à ultrasons (10),
déplacer la source à ultrasons (10) selon un déplacement en trois dimensions de manière continue au niveau de la zone d'interface (4) de manière à former un joint (6) de soudure continu par fusion de matériau thermoplastique de la région (4.1) située en regard de la source à ultrasons (10).

2. Procédé d'assemblage selon la revendication 1, dans lequel les deux pièces (1, 2) sont maintenues en pression dans la zone d'interface (4) en avant et/ou en arrière de la région (4.1) située en regard de la source à ultrasons (10).

3. Procédé d'assemblage selon la revendication 2, dans lequel la pression entre les deux pièces en avant et/ou en arrière de la région (4.1) située en regard de la source à ultrasons est ajustable.

4. Procédé d'assemblage selon l'une des revendications 1 à 3, dans lequel la source à ultrasons (10) fournit aux pièces (1, 2) une énergie lorsqu'elle est excitée, cette énergie étant régulée en fonction d'un paramètre choisi parmi la vitesse de déplacement (V) de la source à ultrasons, son amplitude (A) de vibration lorsqu'elle est excitée, l'effort (F) de compression qu'elle applique aux deux pièces.

5. Procédé d'assemblage selon la revendication 4, dans lequel la régulation est de type PID.

6. Procédé d'assemblage selon l'une des revendications précédentes, dans lequel la source à ultrasons (10) comporte une sonotrode (7) ayant une embase (70) venant en contact avec la pièce (1), cette embase (70) ayant au moins un bord galbé.

7. Procédé d'assemblage selon la revendication 6, dans lequel le bord galbé se trouve d'un côté avant de la sonotrode (7) dans le sens du déplacement.

8. Procédé d'assemblage selon l'une des revendications précédentes, dans lequel les directeurs d'énergie (5) sont des nervures ou des plots.

9. Procédé d'assemblage selon l'une des revendications précédentes dans lequel les directeurs d'énergie (5) sont portés par la pièce (1) en contact avec la source à ultrasons (10).

10. Procédé d'assemblage selon l'une des revendications 8 ou 9, dans lequel les nervures sont dirigées dans le sens du déplacement.

11. Procédé d'assemblage selon l'une des revendications précédentes dans lequel le matériau thermoplastique est amorphe ou semi-cristallin.

12. Procédé d'assemblage selon l'une des revendications précédentes dans lequel lorsqu'on utilise plusieurs sources à ultrasons (10), elles ont un même déplacement synchrone.

13. Assemblage d'au moins deux pièces (1, 2), **caractérisé en ce qu'**il est obtenu par le procédé selon l'une des revendications 1 à 12.

14. Assemblage d'au moins deux pièces selon la revendication 13, **caractérisé en ce que** la pièce (1) qui porte les directeurs d'énergie (5) a été traitée par formage, estampage ou extrusion pour obtenir les directeurs d'énergie.

15. Assemblage d'au moins deux pièces selon l'une des revendications 13 ou 14, **caractérisé en ce qu'**au moins une des deux pièces (1, 2) est chargée en fibres de renfort.

16. Assemblage d'au moins deux pièces selon l'une des revendications 13 à 15, dans lequel l'une des pièces est un profilé (1).

17. Assemblage d'au moins deux pièces selon l'une des revendications 13 à 16, dans lequel l'une des pièces est un panneau (2).

## Patentansprüche

1. Verfahren zum Zusammenfügen von wenigstens zwei starren Verbundwerkstücken (1,2) auf Basis von thermoplastischem Material, die aus vorimprägnierten Schichten gebildet sind, welche mit zwei Krümmungsradien überlagert und drapiert sind, bestehend aus:
Überlagern der zwei Werkstücke (1,2) derart, dass sie wenigstens eine Grenzflächenzone (4) haben, wobei wenigstens eines der zwei Werkstücke mehrere vorstehende Energiedirektoren (5) aufweist, die in der Grenzflächenzone (4) angeordnet sind,
Erregen wenigstens einer Ultraschallquelle (10), die in Kontakt mit einem der zwei Werkstücke gebracht ist, wobei diese Ultraschallquelle (10) eine Kompressionskraft (F) auf die zwei Werkstücke (1,2) in einem Bereich (4.1) der Grenzflächenzone ausübt, der der Ultraschallquelle (10) gegenüberliegt,
Verlagern der Ultraschallquelle (10) gemäß einer Verlagerung in drei Dimensionen in kontinuierlicher Weise im Bereich der Grenzflächenzone (4) derart, dass eine kontinuierliche Schweißverbindung (6) durch Fusion von thermoplastischem Material des Bereichs (4.1) gebildet wird, der der Ultraschallquelle (10) gegenüberliegt.

2. Verfahren zum Zusammenfügen nach Anspruch 1, bei dem die zwei Werkstücke (1,2) in der Grenzflächenzone (4) vor und/oder hinter der Region (4.1), die der Ultraschallquelle (10) gegenüberliegt, unter Druck gehalten werden.

3. Verfahren zum Zusammenfügen nach Anspruch 2, bei dem der Druck zwischen den zwei Werkstücken vor und/oder hinter dem Bereich (4.1), der der Ultraschallquelle gegenüberliegt, einstellbar ist.

4. Verfahren zum Zusammenfügen nach einem der Ansprüche 1-3, bei dem die Ultraschallquelle (10) an die Werkstücke (1,2) Energie liefert, wenn sie erregt ist, wobei diese Energie als Funktion eines Parameters geregelt wird, welcher ausgewählt ist aus der Verlagerungsgeschwindigkeit (V) der Ultraschallquelle, ihrer Vibrationsamplitude (A), wenn sie erregt wird, und der Kompressionskraft (F), die sie auf die zwei Werkstücke ausübt.

5. Verfahren zum Zusammenfügen nach Anspruch 4, bei dem die Regelung vom Typ PID ist.

6. Verfahren zum Zusammenfügen nach einem der vorhergehenden Ansprüche, bei dem die Ultraschallquelle (10) eine Sonotrode (7) mit einer Basis (70) umfasst, die in Kontakt mit dem Werkstück (1) gelangt, wobei diese Basis (70) wenigstens einen ausgebauchten Rand aufweist.

7. Verfahren zum Zusammenfügen nach Anspruch 6, bei dem sich der ausgebauchte Rand auf einer Vorderseite der Sonotrode (7) in der Verlagerungsrichtung befindet.

8. Verfahren zum Zusammenfügen nach einem der vorhergehenden Ansprüche, bei dem die Energiedirektoren (5) Rippen oder Stifte sind.

9. Verfahren zum Zusammenfügen nach einem der vorhergehenden Ansprüche, bei dem die Energiedirektoren (5) von dem Werkstück (1) getragen werden, das in Kontakt mit der Ultraschallquelle (10) ist.

10. Verfahren zum Zusammenfügen nach einem der Ansprüche 8 oder 9, bei dem die Rippen in der Verlagerungsrichtung ausgerichtet sind.

11. Verfahren zum Zusammenfügen nach einem der vorhergehenden Ansprüche, bei dem das thermoplastische Material amorph oder semikristallin ist.

12. Verfahren zum Zusammenfügen nach einem der vorhergehenden Ansprüche, bei dem dann, wenn man mehrere Ultraschallquellen (10) verwendet, sie eine einzige synchrone Verlagerung aufweisen.

13. Zusammenbau von wenigstens zwei Werkstücken (1,2), **dadurch gekennzeichnet, dass** er mittels des Verfahrens nach einem der Ansprüche 1-12 erhalten ist.

14. Zusammenbau von wenigstens zwei Werkstücken nach Anspruch 13, **dadurch gekennzeichnet, dass** das Werkstück (1), welches die Energiedirektoren (5) trägt, mittels Verformung, Stanzen oder Extrusion behandelt worden ist, um die Energiedirektoren zu erhalten.

15. Zusammenbau von wenigstens zwei Werkstücken nach einem der Ansprüche 13 oder 14, **dadurch gekennzeichnet, dass** wenigstens eines der zwei Werkstücke (1,2) mit Verstärkungsfasern versehen ist.

16. Zusammenbau von wenigstens zwei Werkstücken nach einem der Ansprüche 13-15, bei dem eines der Werkstücke ein Profilteil (1) ist.

17. Zusammenbau von wenigstens zwei Werkstücken nach einem der Ansprüche 13-16, bei dem eines der Werkstücke eine Platte (2) ist.

## Claims

1. Method for assembling at least two rigid thermoplastic material based composite parts (1, 2) made of pre-impregnated superimposed layers and laid with two radius consisting of:
superposing the two parts (1, 2) so that they have at least one interface zone (4), wherein at least one of the two parts has one or several energy directors (5), protruding, situated in the interface zone (4),
exciting at least one ultrasonic source (10) brought into contact with one of the two parts, wherein this ultrasonic source (10) applies a compression effort (F) to the two parts (1, 2) in a region (4.1) of the interface zone located opposite the ultrasonic source (10),
displacing the ultrasonic source (10) in a three-dimensional displacement continuously at the interface zone (4) so as to form a continuous welded joint (6) by fusion of the thermoplastic material in the region (4.1) positioned opposite the ultrasonic source (10).

2. Assembly method according to claim 1, wherein the two parts (1, 2) are held under pressure in the interface zone (4) in front and/or behind the region (4.1) positioned opposite the ultrasonic source (10).

3. Assembly method according to claim 2, wherein the pressure between the two parts in front and/or behind the region (4.1) positioned opposite the ultrasonic source is adjustable.

4. Assembly method according to any of claims 1 to 3, wherein the ultrasonic source (10) supplies the parts (1, 2) with energy when it is excited, wherein this energy is regulated according to a parameter chosen from among the speed of displacement (V) of the ultrasonic source, its amplitude (A) of vibration when it is excited and the compression effort (F) that it applies to the two parts.

5. Assembly method according to claim 4, wherein the regulation is of the PID type.

6. Assembly method according to any of the previous claims, wherein the ultrasonic source (10) comprises a sonotrode (7) with a base (70) which comes into contact with the part (1), wherein this base (70) has at least one curved edge.

7. Assembly method according to claim 6, wherein the curved edge is located on a front side of the sonotrode (7) in the direction of the displacement.

8. Assembly method according to any of the previous claims, wherein the energy directors (5) are ribs or pins.

9. Assembly method according to any of the previous claims, wherein the energy directors (5) are carried by the part (1) in contact with the ultrasonic source (10).

10. Assembly method according to any of claim 8 or 9, wherein the ribs are directed in the direction of the displacement.

11. Assembly method according to any of the previous claims, wherein the thermoplastic material is amorphous or semi-crystalline.

12. Assembly method according to any of the previous claims, wherein when several ultrasonic sources (10) are used, they have the same synchronous displacement.

13. Assembly of at least two parts (1, 2), **characterized in that** it is obtained by the method according to any of claims 1 to 12.

14. Assembly of at least two parts according to claim 13, **characterized in that** the part (1) which carries the energy directors (5) is made by forming, stamping or extrusion to obtain the energy directors.

15. Assembly of at least two parts according to any of claims 13 or 14, in which at least one of the two parts (1, 2) is loaded with reinforcing fibres.

16. Assembly of at least two parts according to any of claims 13 to 15, wherein one of the parts is a profiled section (1).

17. Assembly of at least two parts according to any of claims 13 to 16, wherein one of the parts is a panel (2).
